# EUROPEAN PATENT APPLICATION

(11) **EP 4 535 835 A1**
(43) Date of publication of application: **09.04.2025**
(21) Application number: 23201313.6
(22) Date of filing: 02.10.2023
(51) Int. Cl.: H04W 4/06, H04H 20/62, H04W 4/42, H04W 4/80, H04W 84/18, G06Q 50/40, G09F 25/00

(54) **SYSTEM AND METHOD FOR AN UNINTERRUPTED AUDIO STREAM**

(71) Applicant: Televic Rail NV, 8870 Izegem (BE)
(72) Inventor: LAUWEREINS, Steven, B-9700 Oudenaarde (BE)
(74) Representative: IPLodge bv

(57) **Abstract**

**Technical field**

The present invention concerns a passenger information system (PIS) comprising updatable route information data and a set of transmitters which set comprises at least one transmitter, whereby each transmitter of the set of transmitters is configured to wirelessly broadcast one or more audio data streams using a low-energy streaming protocol, whereby the one or more data streams comprise a dynamical broadcast name based on the route information data.

## Description

### Technical field

The present invention pertains to the field of systems, preferably Bluetooth^{®} system, providing an uninterrupted audio stream.

### Background

Passengers travelling from one place to the other often get information from passenger information systems. The information mainly comes from public audio announcements, such as station information about which train arrives on which platform at which time or with how much delay or train information about the stops the train will make. The information also comes in the form of visual information, e.g. from schedule screens in stations or on the train. More intricate information is also communicated, such as which carriage of a train travels to which destination.

In all this, it is important that passengers get the correct information regarding their personal itinerary. Yet, it may be very difficult for passengers to receive the correct information. For instance, a person with a hearing disability may simply not hear the public audio announcements in the station or on the train. Or too many announcements may lead to a failure of the passenger to notice the relevant information.,

One possible solution to allow people with a hearing disability to receive the itinerary information is the use of hearing aid loops. A hearing loop (sometimes called an audio induction loop) is a special type of sound system for use by people with hearing aids. The hearing loop provides a magnetic, wireless signal that is picked up by the hearing aid when it is set to a 'T' (Telecoil) setting. It is an assistive listening technology that can broadcast directly to a wide range of hearing aids, making them a popular option for accessible audio in public spaces. However, hearing aid loops typically only allow one broadcast stream at a time and its broadcast reach is very small, making it basically impossible to use for many different passengers, each travelling along their own itinerary. Furthermore, installation of hearing aid loops tends to be costly, and require dedicated hardware to be used by the passengers. The noise level of hearing aid loops can also be too high.

In this respect, it may also be important for reasons of power conservation, connectivity and privacy that the information is broadcasted locally. For instance:
- using a WiFi or 4G or 5G based streaming protocol to provide travel information will lead to high battery power consumption, which battery may thus not last for long trips;
- trains or other transport vehicles may travel underground, through tunnels, through a deserted area which is not always well covered for 4G/5G reception, etc., leading to loss of 4G/5G-connectivity;
- using e.g. WiFi, 4G/5G, etc. allows tracking of people.

The present invention aims to overcome the problems above, and hereto provides a wireless low energy streaming based system and method, preferably a Bluetooth^{®} low energy based system and method, which allows a passenger device to receive information directly during the whole itinerary of the passenger with low power consumption, high connectivity and privacy.

### Summary of the invention

In a first aspect, the present invention concerns a passenger information system (PIS) comprising updatable route information data and a set of transmitters which set comprises at least one transmitter, whereby each transmitter of the set of transmitters is configured to wirelessly broadcast one or more data streams, preferably audio data streams, using a low-energy streaming protocol, preferably via a Bluetooth^{®} low energy (BLE) streaming protocol, whereby the one or more data streams comprise a dynamical broadcast name based on the route information data.

The PIS allows broadcasting data streams depending on the current state of the PIS. Basically, the PIS comprises data concerning route information, as well as the current time and current position of the one or more vehicles of the transport system. As such, the route information data may require frequent updating, the result of which can be a change in the data streams which need to be broadcasted. For instance, if a train reaches its end destination, the train will obtain a new end destination, and a new broadcast stream, with its own broadcast stream name which can preferably be based on the updated end destination, can be started.

Note that the PIS may comprise one or more transmitters which do not belong to the set of transmitters configured to wirelessly broadcast the one or more data streams comprising a dynamical broadcast name based on the route information data. It is possible that the PIS may comprise transmitters which broadcast only data streams which do not comprise such a dynamical broadcast name, for instance data streams having a static broadcast name.

In an embodiment, the one or more data streams are configured to be broadcasted by a respective subset of the transmitters, each respective subset comprising at least one and preferably multiple transmitters.

Accordingly, the present invention concerns a method for providing one or more audio data streams to a traveller, comprising the steps of:
- wirelessly broadcasting a first set of one or more audio data streams using a low-energy streaming protocol, whereby each of the audio data streams of the first set comprises a dynamical broadcast name based on route information data;
- subsequently updating the route information data, and
- wirelessly broadcasting a second set of one or more audio data streams using a low-energy streaming protocol, whereby each of the audio data streams of the second set comprises a dynamical broadcast name based on the updated route information data.

The present invention further concerns a system for providing a data stream to an audio device, comprising:
- a passenger information system in accordance with a first aspect of the present invention,
- a personal passenger device and
- an audio device,

whereby the personal passenger device is configured to wirelessly scan for broadcasted audio data streams and for wirelessly coupling the audio device directly with a selected audio data stream, said selected audio data stream being selected on the personal passenger device from amongst the broadcasted audio data streams,
whereby a subset of the transmitters is configured to broadcast said selected audio data stream.

Note that hereby, the broadcast name is dynamical, which allows adaptation of the broadcast name when the context changes. For instance, a broadcast name "destination Ostend" can change into "destination Eupen", once the train reaches Ostend and turns around. Note that preferably the system is configured to allow changing the number of data streams, e.g. streams in more different languages may be broadcasted if a train travels to a multilingual region or e.g. an airport.

The broadcasted audio data streams comprise data which can be converted in an audio signal by an audio device.

In a preferred embodiment, the one or more data streams each comprise a unique broadcast name, In a particularly preferred embodiment, said broadcast name is dynamical. This allows the system to alter the broadcast name depending on the context. For instance, a train having a first destination may alter the broadcast name once it has reached that first destination and is embarking to a second destination.

In a preferred embodiment, the set of transmitters is configured to wirelessly broadcast N data streams, N being at least 1, such as 1, 2, 3, 4, 5, 6, 7, 8, 9, 10 or more. In a preferred embodiment, the number of data streams broadcasted by the set of transmitters is changeable. This allows to change the number of data streams at the convenient moment. For instance, if a train travels from, through or to a multilingual region, a language border region, an international airport, etc., the number of data streams can be increased such that data streams in multiple languages are available.

Preferably, the subset of the transmitters cover a continuous broadcast zone wherein the selected data stream can be received uninterrupted, i.e. the audio device can uninterruptedly receive the selected data stream even if the audio device moves within the broadcast zone. Preferably, each transmitter of the subset of transmitters is configured to:
- broadcast one or more identical data streams, and/or
- receive one or more identical data streams, preferably from a passenger information system.

Preferably, the personal passenger device and/or the audio device are configured to allow roaming between transmitters of the subset of transmitters. Hereby, identical streams broadcasted by multiple transmitters comprise an identical broadcast name.

The present invention also concerns a method for providing a data stream to an audio device, comprising the steps of:
- wirelessly broadcasting one or more data streams by a set of transmitters, preferably via a Bluetooth^{®} low energy (BLE) streaming protocol,
- wirelessly scanning for broadcasted data streams by a personal passenger device;
- selecting a selected data stream by the personal passenger device, the selected data stream being broadcasted by a subset of the transmitters, and
- wirelessly coupling the selected data stream to an audio device.

In a preferred embodiment, the subset of the transmitters which is configured to broadcast the selected data stream comprises at least one transmitter, but more preferably multiple transmitters, such as 2, 3, 4, 5, 6, 7, 8, 9, 10 or more transmitters.

In a preferred embodiment, each of the broadcasted data streams is broadcasted by a respective subset of the transmitters, each respective subset comprising at least one and preferably multiple transmitters, such as 2, 3, 4, 5, 6, 7, 8, 9, 10 or more transmitters.

In a preferred embodiment, each of the broadcasted streams comprises a broadcast stream name comprising itinerary transport information, such as destination name, language, station name, trip identifier, etc.

Note that the audio device and the personal passenger device preferably are separate devices. Hereby, the audio device comprises a wireless connection interface configured for receiving a broadcasted data stream, preferably said wireless connection interface being a Bluetooth^{®} interface.

### Overview of the figures

Fig. 1 illustrates a train PIS implemented in accordance with the present invention.
Figs. 2A and 2B illustrate an embodiment of the system and method in accordance with the present invention.

### Detailed description of the invention

The invention will now be further discussed with reference to the drawings which serve as illustrations for the present invention.

A passenger information system (PIS) is a system configured to provide relevant travel information to passengers. It can be employed on public transport vehicles (1), such as trains, and in stations. Hence, preferably, the PIS is a train PIS (1) or a station PIS. Passenger information systems are well known and are commercially available.

The PIS (1) comprises a set of at least one transmitter, and preferably at least two transmitters (A-F), each of which is configured to wirelessly broadcast one or more data streams (2A, 2B, 2C), preferably via a Bluetooth^{®} low energy (BLE) streaming protocol. The data streams may be or may comprise audio data streams for communicating itinerary information to passengers via the audio device (4). The data streams can be broadcasted via a subset of the transmitters. Note that a first subset of transmitters configured to broadcast a first data stream and a second subset of transmitters configured to broadcast a second data stream may be the same subset or may be different subsets whereby the first subset and the second subset may not overlap at all or may overlap partially. As an example, the PIS (1) may comprise 6 transmitters (A-F), which can be identified as A, B, C, D, E and F. hereby,
- a first subset consisting of transmitters A, B and C may be configured to broadcast a first data stream (2A)
- a second subset consisting of transmitters D, E and F may be configured to broadcast a second data stream,
- a third subset consisting of transmitters C and D may be configured to broadcast a third data stream (2B),
- a fourth subset consisting of transmitters C and D may be configured to broadcast a fourth data stream (2C), and as such the subset configured to broadcast the third data stream is the same subset which is configured to broadcast the fourth data stream,
- and so on for a fifth, sixth, etc. data stream and subset

The above example may occur e.g.in a train PIS (1), wherein the train comprises six carriages (11-16), each comprising one or more transmitter (A-F). Hereby, the first three carriages (11-13) may travel (20) to a first destination and the last three carriages (14-16) may travel to a second destination, whereby the train will be split at an intermediate station. As such,
- the transmitters A, B and C in the first three carriages may broadcast a first data stream (2A) relevant for the first destination,
- the transmitters D, E and F in the last three carriages may broadcast a second data stream relevant for the second destination,
- the transmitters C and D in the third and fourth carriage may broadcast a third data stream (2B) for passengers in the third and fourth carriage traveling to the first destination, and
- the transmitters C and D in the third and fourth carriage may broadcast a fourth data stream (2C) for passengers in the third and fourth carriage traveling to the second destination.

Hence,
- a passenger in the first two carriages may subscribe and listen to the first data stream (2A) for the first destination,
- a passenger in the third carriage may subscribe and listen to the first data stream (2A) or the third data stream (2B) if they are traveling to the first destination or they may subscribe and listen to the fourth data stream (2C) if they are travelling to the second destination,
- a passenger in the fourth carriage may subscribe and listen to the second data stream or the fourth data stream if they are travelling to the second destination or they may subscribe and listen to the third data stream if they are travelling to the first destination, and
- a passenger in the fifth or sixth carriage may subscribe and listen to the second data stream.

If the train reaches the station where the train needs to split up, the route information data of the PIS is updated accordingly, and the data streams of at least a subset of the transmitters may be changed on the basis of the updated route information data. For instance, the transmitter C may stop broadcasting the fourth data stream and the transmitter D may stop broadcasting the third data stream.

Furthermore, if the route information data of the PIS is updated in that the transport vehicle travels through a region with a different language, the transmitters may start broadcasting additional data streams in said different language, said additional data streams preferably comprising broadcast names based on said different language. Alternatively, the PIS may be configured to broadcast data streams in many different languages during the complete trip. It is then up to the passenger to decide which data stream they will subscribe to.

If each part of the original train reaches its end destination, the transmitters on that part may be configured to broadcast data streams with broadcast stream names depending on e.g. the new end destination. This also means that the PIS on a train can be configured to initialize the data streams which need to be broadcasted, as well as the broadcast names thereof, at the beginning of each new trip.

Other data streams may also be broadcasted. Note that the PIS (1) can be configured to ensure that the broadcasted data streams are broadcasted in a non-overlapping period with respect to other broadcasted data streams and/or to other audio signals such as intercom signals. For instance, if the conductor on the train makes an announcement through the PIS, this announcement may be recorded, and optionally processed, e.g. translated, and subsequently included in one or more of the broadcasted data streams. However, the PIS preferably is configured to control the transmitters to broadcast the data streams in a non-overlapping period with respect to audio data streams which are not broadcasted via said broadcasted data streams.

Coupling a data stream to an audio device (4) is a commercially available technology. For instance, Auracast^{™} is commercially available BLE-based technology allowing a data stream to wirelessly be broadcasted to one or more audio devices. Hence, in a preferred embodiment, the transmitters (A-F) are or comprise an Auracast^{™} transmitter. Such an Auracast^{™} transmitter begins a BLE broadcast data stream that includes advertisements, which can provide a personal passenger device (5) with information about the broadcast (e.g. name, content, codec configuration, etc.), as well as one or more data streams (2A-2C), preferably audio data streams (e.g. left and right stereo audio data streams).

The personal passenger device (5) scans for the advertisements of the broadcasted data streams and preferably comprises a user interface (Ul) (6) to enable users to select a broadcasted data stream, e.g. similar to the Ul commonly used to connect to Wi-Fi networks in public spaces. Alternatively, the personal passenger device (5) may be configured to automatically select a preferred data stream, e.g. in accordance with a predefined priority configuration. For instance, a user which travels regularly along a train route may have configured their personal passenger device to automatically select the data stream corresponding to their language and their destination as soon as the personal passenger device discovers said data stream in the scan for broadcasted data streams. Hence, preferably the personal passenger device (5) is configured to continuously scan for broadcasted data streams (2A-2C). Once a data stream is selected, e.g. an Auracast^{™} broadcast, the personal passenger device (5), which can act as an Auracast^{™} assistant, provides the audio device (4), which can be an Auracast^{™} receiver (e.g. headphone, earbud, hearing aid, etc.), the information it needs to join (8) the selected broadcast (7), i.e. to connect to the selected data stream, which can be an Auracast^{™} broadcast. Note that once the audio device is connected directly to the selected data stream, the personal passenger device does not longer need to participate in the interaction.

Broadcasting a data stream via a subset of multiple transmitters is a commercially available technology. For instance, the subset of transmitters may be configured as a BLE mesh using Bluetooth^{®} mesh networking or as a BLE roaming system, such as disclosed in e.g. US patent no. 10,667,195 B2. Alternatively, or additionally, the transmitters may be connected (9) with a PIS server unit (3) which is configured to provide each of the transmitters with instructions regarding which data stream to broadcast and/or at which moment to broadcast a data stream.

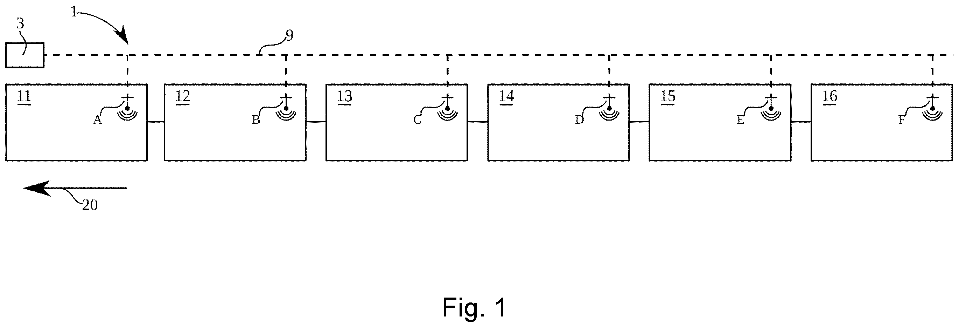

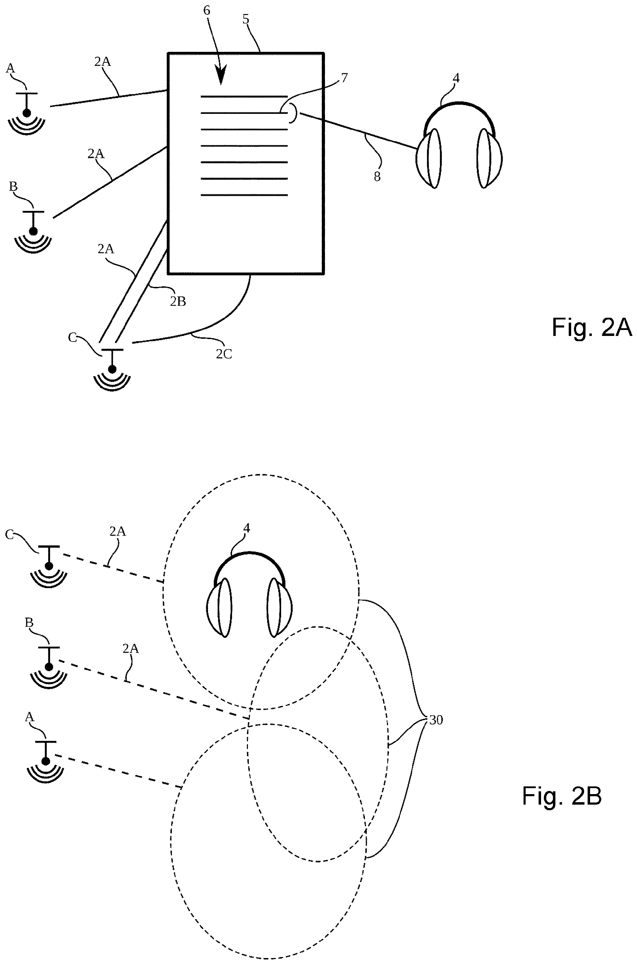

Broadcasting a data stream (2A) via a subset (A, B, C) of transmitters further allows to provide a user of an audio device (4) with a larger uninterrupted zone (30) wherein the selected data stream (2A) can be received. With reference to figs. 1 and 2B, the zone (30) preferably covers the first two carriages (11, 12) and at least part of the third carriage (13).

In an embodiment, at least one and preferably each of the data streams comprises a dynamical broadcast name. This broadcast name can be and preferably is defined independently from the hardware used to broadcast the data streams. More specifically, the broadcast name of a data stream is defined taking into account travel information accessible by the PIS and typically also contained within the data stream. As such, the broadcast name can be defined contextually. Using a dynamical broadcast name presents a number of advantages:
- there is no chance of interference from systems on other nearby busses, trains, trams, etc. Note that, for instance, this would be the case if one would use a single broadcast name for the broadcasts on all transport vehicles of the transportation company;
- the broadcast name can be defined in a clear, relevant, user-friendly and unique manner. This is particularly advantageous when, for instance, trains are composed of multiple units or carriages, each comprising a transmitter, and a passenger may select which broadcasted data stream to sign into. Note that if each transmitter broadcasts data streams with a broadcast name fixed to the transmitter, the passenger would have to reselect the data stream every time they changed carriages.

Note that a broadcast name is typically defined statically, as e.g. possibly done in theatres, airports, etc., whereby multiple transmitters can be coupled to broadcast a data stream with a predefined static broadcast name. However, in the present invention, the broadcast name of each data streams is particularly and preferably automatically linked to the route information data of the PIS, which route information data is updated frequently, thus resulting in changes of the data streams and of the broadcast names of the broadcasted data streams.

In a preferred embodiment, each of the broadcasted streams comprises a broadcast stream name comprising itinerary transport information, such as destination name, language, station name, trip identifier, route number, etc. The broadcast stream name refers to the identifier which shows up in the scan by the personal passenger device. Preferably it comprises relevant information for the passenger. In the case of a railway passenger, it may preferably comprise a combination of:
- the name of the travel destination,
- the departure time,
- the arrival time,
- route number,
- the language of the audio signal encoded in the data stream, and/or
- an indication whether the data stream covers all information concerning a route, including e.g. all stops and arrival times, or only exceptional information, such as e.g. delays, skipped stops, connecting trains, etc..

As indicated above, the personal passenger device (5) may be configured to automatically select a preferred data stream, e.g. in accordance with a predefined priority configuration. In a preferred embodiment, the personal passenger device comprises an ordered list of data stream names, and the personal passenger device is configured to automatically connect the audio device subsequently to the data streams associated with said data stream names in line with the order of the ordered list or passenger location. As such, the personal passenger device may comprise a list of the relevant data stream names which are relevant to their full itinerary. Preferably, the ordered list is composed using a route planner. In an embodiment, the system comprises a route planner which is configured to compose an ordered list of data stream names on the basis of a route which can be selected by the passenger. In a preferred embodiment, the ordered list is updated dynamically, preferably using the route planner, and preferably on the basis of real time information, which can for instance be information related to transportation delays. As such, the ordered list of data names can be updated in real time in case of a delay. For instance, if a train which forms part of an original route, has a significant delay, the route planner may be configured to automatically find the best alternative route and may thus be configured to automatically update the ordered list of data stream names in view of the alternative route.

For instance, an English ("EN") speaking passenger travelling from station X to station Y with the train having a destination D and further to station Z with the train having destination E could comprise the following ordered list:
(a) EN_stationX_destinationD
(b) EN_trainD
(c) EN_stationY_destinationE
(d) EN_trainE
(e) EN_stationZ

As soon as the passenger comes within reach of the broadcasting zone of data stream (a), e.g. when they enter the station X, the personal passenger device will automatically connect the audio device to stream (a). This data stream may comprise English audio messages from the station X's PIS which are relevant for travellers to destination D, such as on which platform the train with destination D will arrive. While waiting on the platform, the train with destination D may arrive, at which time the data stream (b) can be detected in the scan of the personal passenger device, which then connects stream (b) to the audio device. Stream (b) preferably comprises a message at which station the train will arrive next, and when the train reaches station Y, the passenger is so informed. When stepping out of the train, or maybe already when the train enters station Y, the personal passenger device can detect stream (c) and again reconnects the audio device such that stream (c) is streamed thereto. Stream (c) provides information on the arrival time and platform of the train with destination E, allowing the passenger to easily find the correct platform and board the correct train. In the train with destination E, the personal passenger device detects stream (d) and reconnects the audio device thereto. Stream (d) may again provide the passenger with information during the trip on the train with destination E, including the station name of the next stop. When the train reaches station Z, the passenger is thus informed and may leave the train. The personal passenger device may then scan and detect stream (e), which may be the general stream of station Z, comprising general announcements.

In an embodiment, the personal passenger device is or comprises a smartphone or a tablet comprising one or more wireless communication interfaces, preferably comprising a Bluetooth^{®} interface, configured to communicate with the transmitters and the audio device.

In an embodiment, the audio device is or comprises a headphone or an earpiece or a set of earpieces comprising one or more wireless communication interfaces, preferably comprising a Bluetooth^{®} interface.

## Claims

1. A passenger information system (PIS) comprising updatable route information data and a set of transmitters which set comprises at least one transmitter,
whereby each transmitter of the set of transmitters is configured to wirelessly broadcast one or more data streams, preferably audio data streams, using a low-energy streaming protocol, whereby the one or more data streams comprise a dynamical broadcast name based on the route information data.

2. A PIS according to claim 1, wherein the low-energy streaming protocol is a Bluetooth^{®} low energy (BLE) streaming protocol.

3. A PIS according to any one of the preceding claims, wherein the dynamical broadcast name is based on any or any combination of the following route information data:
- the name of the travel destination of a transport vehicle,
- the departure time of a transport vehicle,
- the arrival time of a transport vehicle,
- the route number of a transport vehicle, and/or
- an indication whether the data stream covers all information concerning a route or only exceptional information.

4. A PIS according to any one of the preceding claims, wherein the dynamical broadcast name is based on the language of an audio signal encoded in the data stream.

5. A PIS according to any one of the preceding claims, wherein the set of at least one transmitter comprises two or more transmitters.

6. A PIS according to any one of the previous claims, whereby the one or more data streams are configured to be broadcasted by a respective subset of the transmitters, each respective subset comprising at least one and preferably multiple transmitters.

7. A system for providing a data stream to an audio device, comprising:
a. a passenger information system (PIS) according to any one of the preceding claims,
b. a personal passenger device and
c. an audio device,
whereby the personal passenger device is configured to wirelessly scan for broadcasted audio data streams and for wirelessly coupling the audio device directly with a selected data stream, said selected data stream being selected on the personal passenger device from amongst the broadcasted data streams, and
whereby a subset of the transmitters is configured to broadcast said selected audio data stream.

8. A system according to claim 7, whereby the broadcasted audio data streams comprise data which can be converted in an audio signal by the audio device and/or whereby the audio device is configured to convert the broadcasted audio data streams in an audio signal.

9. A system according to any one of the previous claims 7 to 8, whereby the subset of the transmitters covers a continuous broadcast zone wherein the selected data stream can be received uninterrupted, thus allowing roaming.

10. A system according to any one of the previous claims 7 to 9, whereby the subset of the transmitters which is configured to broadcast the selected audio data stream comprises multiple transmitters.

11. A system according to any one of the previous claims 7 to 10, whereby the personal passenger device comprises an ordered list of data stream names, and the personal passenger device is configured to automatically connect the audio device subsequently to the data streams associated with said data stream names in line with the order of the ordered list.

12. A method for providing one or more data streams, preferably audio data streams, to a traveller, comprising the steps of:
- wirelessly broadcasting a first set of one or more data streams using a low-energy streaming protocol, whereby each of the data streams of the first set comprises a dynamical broadcast name based on route information data;
- subsequently updating the route information data, and
- wirelessly broadcasting a second set of one or more data streams using a low-energy streaming protocol, whereby each of the data streams of the second set comprises a dynamical broadcast name based on the updated route information data.

13. A method for providing an audio data stream to an audio device, comprising the steps of:
∘ wirelessly broadcasting one or more audio data streams by a set of at least one transmitter, and preferably at least two transmitters, preferably via a Bluetooth^{®} low energy (BLE) streaming protocol,
whereby the one or more data streams comprise a dynamical broadcast name based on updatable route information data,
∘ wirelessly scanning for broadcasted audio data streams by a personal passenger device;
∘ selecting a selected audio data stream by the personal passenger device, the selected audio data stream being broadcasted by a subset of the transmitters, and
∘ wirelessly coupling the selected audio data stream directly to an audio device.

14. A method according to any one of claims 12 to 13, whereby the personal passenger device comprises an ordered list of data stream names, and the personal passenger device is configured to automatically connect the audio device subsequently to the audio data streams associated with said data stream names in line with the order of the ordered list.
